(19) Europäisches Patentamt
European Patent Office
Office européen des brevets

(11) EP 2 328 213 A1

(12) EUROPEAN PATENT APPLICATION

(43) Date of publication:
01.06.2011 Bulletin 2011/22

(51) Int Cl.:
H01M 4/04 (2006.01)          H01M 10/052 (2010.01)
H01M 4/485 (2010.01)         H01M 4/131 (2010.01)
H01M 4/1391 (2010.01)        C01G 23/00 (2006.01)

(21) Application number: 10192519.6

(22) Date of filing: 25.11.2010

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 26.11.2009 JP 2009268785

(71) Applicant: NIPPON CHEMICAL INDUSTRIAL
COMPANY LIMITED
Tokyo 136-8515 (JP)

(72) Inventor: Awano, Hidekazu
Koto-ku,
Tokyo 136-8515 (JP)

(74) Representative: Evans, Marc Nigel et al
Page White & Farrer
Bedford House
John Street
London, WC1N 2BF (GB)

(54) Method for manufacturing lithium titanate for lithium secondary battery active material

(57) The present invention provides a method for manufacturing lithium titanate for a lithium secondary battery active material in which substantially no titanium dioxide, raw material, is present and which can provide excellent rapid charge and discharge characteristics and high-temperature storage characteristics to a lithium secondary battery when used as a negative electrode active material. The method for manufacturing lithium titanate for a lithium secondary battery active material according to the present invention comprises a first step of preparing a mixture comprising a Li compound, titanium dioxide having a specific surface area of 1.0 to 50.0 $m^2/g$ as measured by a BET method, and one or two or more sulfates containing a metal element selected from the group consisting of Mg, Ca, and Al; a second step of pressure-molding the mixture to prepare a reaction precursor; a third step of firing the reaction precursor; and a fourth step of pulverizing the fired product by a gas-flow pulverizer to obtain lithium titanate represented by a general formula: $Li_xTi_yO_{12}$, having an average particle diameter of 3.0 μm or less.

Figure 1

**Description**

BACKGROUND OF THE INVENTION

Field of the Invention

The present invention relates to a method for manufacturing lithium titanate for a lithium secondary battery active material.

Description of the Related Art

A lithium secondary battery using $Li_4Ti_5O_{12}$ among lithium titanates, lithium-titanium complex oxides, as an electrode active material has a voltage of about 1.55 V based on lithium, and the volume expansion of the lithium secondary battery during charge and discharge is small. Thus, the lithium secondary battery is known to have a long life. Therefore, this lithium titanate is a material that receives particular attention in the fields of hybrid electric vehicles (HEVs), and large batteries, such as a stationary type. In addition, this lithium titanate can be used for a positive electrode and a negative electrode, and is particularly promising as a negative electrode active material.

A method of, using lithium hydroxide or lithium carbonate as a lithium compound, firing a mixture of this lithium compound and titanium oxide at 700°C to 1600°C is disclosed as a method for manufacturing lithium titanate (for example, see Japanese Patent Laid-Open No. 6-275263).

In addition, a method of dissolving all or part of a lithium compound in a solvent by mixing titanium oxide and the solvent, drying the mixture to prepare a mixed solid, calcining this mixed solid to prepare a composition composed of $TiO_2$ and $Li_2TiO_3$, or a composition composed of $TiO_2$, $Li_2TiO_3$, and $Li_4Ti_5O_{12}$, and then subjecting this composition to main firing is disclosed as a method for manufacturing lithium titanate (for example, see Japanese Patent Laid-Open No. 2001-213622).

Further, a method of compression-molding a mixture of a lithium compound and titanium oxide, calcining the obtained molded product to prepare a composition composed of $TiO_2$ and $Li_2TiO_3$, or a composition composed of $TiO_2$, $Li_2TiO_3$, and $Li_4Ti_5O_{12}$, and then subjecting this composition to main firing is disclosed as a method for manufacturing lithium titanate (for example, see Japanese Patent Laid-Open No. 2000-302547).

In addition, the use of lithium titanate, to which sulfur is added, as a negative electrode active material for a nonaqueous electrolyte secondary battery is proposed (for example, see Japanese Patent Laid-Open No. 2004-235144).

However, lithium secondary batteries using, as a negative electrode active material, lithium titanates obtained by the above manufacturing methods have a problem with rapid charge and discharge characteristics.

Accordingly, it is an object of the present invention to provide a method for manufacturing lithium titanate for a lithium secondary battery active material that can provide excellent rapid charge and discharge characteristics to a lithium secondary battery when used as a negative electrode active material.

SUMMARY OF THE INVENTION

In order to solve the above problem, the present inventors have diligently studied to find that lithium titanate obtained by pressure-molding a mixture comprising titanium dioxide having a specific surface area in a particular range as measured by the BET method, a lithium compound, and a particular sulfate and then firing this mixture has substantially no remaining titanium dioxide, and that a lithium secondary battery comprising, as a negative electrode active material, lithium titanate obtained by pulverizing the obtained fired product by a gas-flow pulverizer and further adjusting the average particle diameter of the obtained lithium titanate in a particular range particularly has excellent rapid charge and discharge characteristics, leading to the completion of the present invention.

Specifically, a method for manufacturing lithium titanate for a lithium secondary battery active material according to the present invention comprises a first step of preparing a mixture comprising a lithium compound, titanium dioxide having a specific surface area of 1.0 to 50.0 $m^2$/g as measured by a BET method, and one or two or more sulfates containing a metal element selected from the group consisting of magnesium, calcium, and aluminum; a second step of pressure-molding the mixture to prepare a reaction precursor; a third step of firing the reaction precursor; and a fourth step of pulverizing a fired product obtained in the third step by a gas-flow pulverizer to obtain lithium titanate represented by a general formula: $Li_xTi_yO_{12}$, where a Li/Ti atomic ratio is in the range of 0.70 to 0.90, $3.0 \leq x \leq 5.0$, and $4.0 \leq y \leq 6.0$, having an average particle diameter of 3.0 $\mu$m or less.

The mixture prepared in the first step preferably has a specific volume of 1.30 ml/g or more.

In the third step, a firing temperature of the reaction precursor is preferably 600°C or more and 900°C or less.

The gas-flow pulverizer is preferably a jet mill.

The titanium dioxide preferably has a chlorine content of 1500 ppm or less.

The titanium dioxide is preferably anatase type titanium dioxide.

The method for manufacturing lithium titanate for a lithium secondary battery active material according to the present invention comprises a first step of preparing a mixture comprising a lithium compound, titanium dioxide having a specific surface area of 1.0 to 50.0 m$^2$/g as measured by a BET method, and one or two or more sulfates containing a metal element selected from the group consisting of magnesium, calcium, and aluminum; a second step of pressure-molding the mixture to prepare a reaction precursor; a third step of firing the reaction precursor; and a fourth step of pulverizing a fired product obtained in the third step by a gas-flow pulverizer to obtain lithium titanate represented by a general formula: $Li_xTi_yO_{12}$, where a Li/Ti atomic ratio is in the range of 0.70 to 0.90, $3.0 \leq x \leq 5.0$, and $4.0 \leq y \leq 6.0$, having an average particle diameter of 3.0 μm or less, and therefore, lithium titanate comprising substantially no titanium dioxide, raw material, is obtained. In addition, a lithium secondary battery using this lithium titanate as a negative electrode active material exhibits particularly excellent rapid charge and discharge characteristics.

BRIEF DESCRIPTION OF THE DRAWINGS

FIG. 1 is an X-ray diffraction diagram of lithium titanate obtained in Example 1;
FIG. 2 is a particle size distribution of the lithium titanate obtained in Example 1, measured by a laser scattering particle size distribution measurement apparatus; and
FIG. 3 is a particle size distribution of lithium titanate obtained in Comparative Example 4, measured by the laser scattering particle size distribution measurement apparatus.

DETAILED DESCRIPTION OF THE PREFERRED EMBODIMENT

The best mode of the method for manufacturing lithium titanate for a lithium secondary battery active material according to the present invention will be described.
This mode will be specifically described for better understanding of the spirit of the invention, and does not limit the present invention unless otherwise specified.

The method for manufacturing lithium titanate for a lithium secondary battery active material according to the present invention is a method comprising the first step of preparing a mixture comprising a lithium compound, titanium dioxide having a specific surface area of 1.0 to 50.0 m$^2$/g as measured by the BET method, and one or two or more sulfates containing a metal element selected from the group consisting of magnesium, calcium, and aluminum; the second step of pressure-molding the above mixture to prepare a reaction precursor; the third step of firing the above reaction precursor; and the fourth step of pulverizing the fired product obtained in the above third step by a gas-flow pulverizer to obtain lithium titanate represented by the general formula: $Li_xTi_yO_{12}$, where the Li/Ti atomic ratio is in the range of 0.70 to 0.90, $3.0 \leq x \leq 5.0$, and $4.0 \leq y \leq 6.0$, having an average particle diameter of 3.0 μm or less.

(First Step)

In the method for manufacturing lithium titanate for a lithium secondary battery active material according to the present invention, the first step is the step of preparing a uniform mixture comprising a lithium compound, titanium dioxide having a specific surface area of 1.0 to 50.0 m$^2$/g as measured by the BET method, and one or two or more sulfates containing a metal element selected from the group consisting of magnesium (Mg), calcium (Ca), and aluminum (Al).

In the first step, for example, inorganic lithium compounds, such as lithium hydroxide, lithium carbonate, and lithium nitrate, are preferably used as the lithium compound. Among these lithium compounds, lithium carbonate is preferred because it is industrially easily available and is inexpensive.
The lithium compound preferably has an average particle diameter of 1.0 μm or more and 20.0 μm or less, more preferably 1.0 μm or more and 10.0 μm or less, as a value obtained by a laser light scattering method.
The reason why the lithium compound more preferably has an average particle diameter of 1.0 μm or more and 10.0 μm or less as a value obtained by a laser light scattering method is that the reactivity with titanium dioxide is good.

Titanium dioxide is usually industrially manufactured by a chlorine method or a sulfuric acid method. In the present invention, either titanium dioxide manufactured by a sulfuric acid method or titanium dioxide manufactured by a chlorine method can be used without particular limitation.

In the present invention, titanium dioxide having a specific surface area of 1.0 to 50.0 m$^2$/g as measured by the BET method is used, and titanium dioxide having a specific surface area of 20.0 to 40.0 m$^2$/g is preferably used.
The reason why titanium dioxide having a specific surface area of 1.0 to 50.0 m$^2$/g as measured by the BET method is used is that if the titanium dioxide has a specific surface area of less than 1.0 m$^2$/g as measured by the BET method, unreacted titanium dioxide tends to remain, and a lithium secondary battery comprising, as a component, lithium titanate manufactured using this titanium dioxide does not have sufficient rapid charge and discharge performance, and on the other hand, if the titanium dioxide has a specific surface area of more than 50.0 m$^2$/g as measured by the BET method, on the contrary, it is difficult to obtain a uniform mixture, and a lithium secondary battery comprising, as a component, lithium titanate manufactured using this titanium dioxide does not have sufficient rapid charge and discharge characteristics.

The titanium dioxide preferably has an average particle diameter of 3.0 $\mu$m or less, more preferably 0.10 $\mu$m or more and 3.0 $\mu$m or less, as a value obtained by a laser light scattering method.

The reason why the titanium dioxide more preferably has an average particle diameter of 0.10 $\mu$m or more and 3.0 $\mu$m or less as a value obtained by a laser light scattering method is that if the titanium dioxide has an average particle diameter in this range, uniform mixing with each raw material is possible, and a lithium secondary battery comprising, as a component, lithium titanate manufactured using this titanium dioxide, particularly a lithium secondary battery comprising the lithium titanate as a negative electrode active material, has improved rapid charge and discharge performance.

The crystal structure of titanium dioxide is broadly divided into an anatase type and a rutile type. In the present invention, both can be used, but an anatase type with an anatase type content of 90% by weight or more is particularly preferably used in terms of good reactivity.

In addition, the titanium dioxide preferably has a chlorine content of 1500 ppm or less, more preferably 500 ppm or less, and further preferably 100 ppm or less.

The reason why the chlorine content in the titanium dioxide is 1500 ppm or less is that if the titanium dioxide has a chlorine content in this range, a lithium secondary battery comprising, as a component, lithium titanate manufactured using this titanium dioxide, particularly a lithium secondary battery comprising the lithium titanate as a negative electrode active material, has improved rapid charge and discharge performance.

A compound containing a metal element selected from the group consisting of magnesium (Mg), calcium (Ca), and aluminum (Al) is used as the sulfate. Specific examples of such a compound include magnesium sulfate, calcium sulfate, aluminum sulfate, or complex sulfates containing two or more of these metal elements. These sulfates may be hydrates or anhydrides. Among these sulfates, magnesium sulfate and calcium sulfate are particularly preferred because a lithium secondary battery comprising, as a component, lithium titanate manufactured using these sulfates has excellent rapid charge and discharge characteristics.

In the present invention, fine sulfates are preferred because uniform mixing is possible, the reactivity is also good, and the obtained lithium titanate can provide excellent rapid charge and discharge performance to a lithium secondary battery.

In addition, the mixing ratio of the lithium compound to the titanium dioxide is preferably in the range of 0.70 to 0.90, more preferably in the range of 0.75 to 0.85, as the molar ratio of lithium atoms in the lithium compound to titanium atoms in the titanium dioxide (Li/Ti).

The reason why the mixing ratio of the lithium compound to the titanium dioxide is preferably in the range of 0.70 to 0.90 as the molar ratio of lithium atoms in the lithium compound to titanium atoms in the titanium dioxide (Li/Ti) is that if the mixing ratio is in this range, a lithium secondary battery comprising, as a component, lithium titanate manufactured using this lithium compound and titanium dioxide, particularly a lithium secondary battery comprising the lithium titanate as a negative electrode active material, has improved discharge capacity. In addition, if the mixing ratio of the lithium compound to the titanium dioxide is less than 0.70 as the above molar ratio (Li/Ti), rutile type titanium dioxide remains, and a lithium secondary battery comprising, as a component, lithium titanate manufactured using this lithium compound and titanium dioxide does not have sufficient discharge capacity, and on the other hand, if the mixing ratio is more than the above molar ratio (Li/Ti) of 0.90, $Li_2TiO_3$, a by-product, is produced, and a lithium secondary battery comprising, as a component, lithium titanate manufactured using this lithium compound and titanium dioxide does not have sufficient discharge capacity.

In addition, the amount of sulfate added is preferably 0.01% by weight or more and 1.2% by weight or less, more preferably 0.03% by weight or more and 1.0% by weight or less, in terms of $SO_4$ with respect to lithium titanate to be produced.

The reason why the amount of sulfate added is preferably 0.01% by weight or more and 1.2% by weight or less in terms of $SO_4$ with respect to lithium titanate to be produced is that if the amount of sulfate added is less than 0.01% by weight in terms of $SO_4$, a lithium secondary battery comprising, as a component, lithium titanate manufactured using this sulfate does not have sufficient rapid charge and discharge performance, and on the other hand, if the amount of sulfate added is more than 1.2% by weight in terms of $SO_4$, a lithium secondary battery comprising, as a component, lithium titanate manufactured using this sulfate does not have sufficient discharge capacity.

When titanium dioxide obtained by a sulfuric acid method is used as titanium dioxide in the present invention, this titanium dioxide may contain sulfuric acid radicals at 0.003% by weight or more and 0.075% by weight or less in terms of $SO_4$, and it is preferred that considering the amount of sulfuric acid radicals in this titanium dioxide, the sulfate added is such that the total amount (A + B) of $SO_4$ in the sulfate (A) and $SO_4$ in the titanium dioxide, a raw material, (B) is 0.01% by weight or more and 1.2% by weight or less, preferably 0.03% by weight or more and 1.0% by weight or less, in terms of $SO_4$ with respect to lithium titanate to be produced, and the amount of sulfate itself added is preferably 0.03% by weight or more and 1.0% by weight or less in terms of $SO_4$.

When the lithium titanate used in the present invention is immersed in water, a substantially total amount of sulfuric acid radicals ($SO_4$) are dissolved as $LiSO_4$, whereas little magnesium, calcium, and aluminum are dissolved. Therefore, it is considered that in the lithium titanate of the present invention, the sulfuric acid radicals in the sulfate are uniformly contained in the lithium titanate particle surface, and the other, the magnesium, calcium, or aluminum metal constituting the sulfate, is uniformly contained in the lithium titanate in the form of an oxide or the like. In the present invention, the reason why the lithium secondary battery has improved rapid charge and discharge characteristics is not clear, but this is considered to be due to some synergistic effect of the sulfuric acid radicals uniformly present in the particle surface, and the oxide or the like of the magnesium, calcium, or aluminum metal present separately from the sulfuric acid radicals.

The method for mixing the lithium compound, the titanium dioxide, and the sulfate may be either a wet mixing method of mixing all materials in a solvent, or a dry mixing method of mixing all materials without using a solvent, as long as a uniform mixture can be prepared. But, the obtained mixture preferably has a specific volume of 1.30 ml/g or more, more preferably 1.30 ml/g or more and 2.00 ml/g or less.

The reason why the mixture preferably has a specific volume of 1.30 ml/g or more is that the firing of the reaction precursor (the third step) described later can be performed at a low temperature of 600°C or more and 900°C or less, and therefore, grain growth due to sintering is suppressed, and fine lithium titanate in which titanium dioxide, an unreacted raw material, does not remain is obtained.

The specific volume in the present invention is obtained by placing 10 g of a sample in a 50 ml graduated cylinder, tapping 500 times, allowing the cylinder to stand, then reading the volume, and calculating the following formula (1), according to a tapping method, based on the apparent density or apparent specific volume method described in JIS-K-5101.

$$\text{specific volume (ml/g)} = V/F \qquad (1)$$

where F represents the mass (g) of the treated sample in the receiver, and V represents the volume (ml) of the sample after the tapping.

(Second Step)

In the method for manufacturing lithium titanate for a lithium secondary battery active material according to the present invention, the second step is the step of pressure-molding the uniform mixture prepared in the first step to prepare a reaction precursor.

The pressure molding machine for pressure-molding the uniform mixture prepared in the first step is not particularly limited as long as it can apply pressure. For example, a tableting machine, a briquetting machine, a roller compactor, and the like are preferably used.

The molding pressure in the pressure molding is different according to the pressure molding machine, the amount of materials fed, and the like, and is not particularly limited. But, it is preferably 5 MPa or more and 200 MPa or less, and more preferably 5 MPa or more and 180 MPa or less.

The reason why the molding pressure in the pressure molding is preferably 5 MPa or more and 200 MPa or less is that the firing of the reaction precursor (the third step) described later can be performed at a low temperature of 600°C or more and 900°C or less, and therefore, grain growth due to sintering is suppressed, and fine lithium titanate in which titanium dioxide, an unreacted raw material, does not remain can be obtained.

According to this second step, it is possible to increase the contact area between the lithium compound and the titanium dioxide to further enhance the reactivity. Therefore, the firing of the reaction precursor (the third step) described later can be performed at a low temperature of 600°C or more and 900°C or less, and therefore, there is no grain growth due to sintering, and fine lithium titanate that is a single phase by X-rays is obtained.

(Third Step)

In the method for manufacturing lithium titanate for a lithium secondary battery active material according to the present invention, the third step is the step of firing the reaction precursor prepared in the second step to obtain a fired product of lithium titanate.

In this third step, the firing temperature of the reaction precursor is preferably 600°C or more and 900°C or less, and more preferably 650°C or more and 850°C or less.

The reason why the firing temperature of the reaction precursor is preferably 600°C or more and 900°C or less is that if the firing temperature is less than 600°C, the reaction of the lithium compound with the titanium dioxide is not sufficient, the titanium dioxide, a raw material, remains, and it is difficult to obtain lithium titanate with high crystallinity, and on the other hand, if the firing temperature is more than 900°C, the sintering and grain growth of the lithium titanate occur, it is difficult to obtain fine lithium titanate even if pulverization treatment is performed in the fourth step described later, and further, the rapid charge and discharge performance of a lithium secondary battery comprising the lithium titanate as a negative electrode active material tends to be impaired.

In addition, the firing time is 1 hour or more, and preferably 1 hour or more and 10 hours or less.

Further, the firing atmosphere is not particularly limited, and the firing of the reaction precursor can be performed in the air, in an oxygen atmosphere, or in an inert gas atmosphere.

In the present invention, the firing may be performed any number of times, as desired. In addition, for the purpose of making the powder properties uniform, one fired once may be pulverized and then fired again.

Then, after the firing, the fired product of lithium titanate is appropriately cooled and recovered.

(Fourth Step)

In the method for manufacturing lithium titanate for a lithium secondary battery active material according to the present invention, the fourth step is the step of pulverizing the fired product obtained in the above third step by a gas-flow pulverizer to obtain lithium titanate represented by the general formula: $Li_xTi_yO_{12}$, where the Li/Ti atomic ratio is in the range of 0.70 to 0.90, $3.0 \leq x \leq 5.0$, and $4.0 \leq y \leq 6.0$, having an average particle diameter of 3.0 $\mu$m or less.

The pulverization treatment by the gas-flow pulverizer is a method of releasing a high-pressure inert gas from a narrow nozzle to generate a high-speed gas flow, which accelerates a roughly pulverized powder to cause the collision of the roughly pulverized powder with each other and the collision of the roughly pulverized powder with a target or a container wall for pulverization.

In this fourth step, by performing pulverization treatment by the gas-flow pulverizer, the pulverized particles after the pulverization treatment are dispersed in the gas flow without aggregation, compared with the case of using a medium pulverizer, such as a ball mill, and therefore, one with a sharp particle size distribution is obtained. In addition, the pulverization treatment by the gas-flow pulverizer also has an advantage that due to weak impact force, such as the collision of the particles with each other, or the collision of the particles with the wall, the distortion of the crystal structure can be reduced, compared with one in which a pulverization raw material is put into the strong collision of mediums, such as a medium mill, and destroyed.

The conditions of the pulverization treatment by the gas-flow pulverizer can be controlled by adjusting the ratio of the gas flow supply to the raw material supply. This ratio of the gas flow supply to the raw material supply is different according to the type of the pulverizer used, but should be determined by appropriately selecting optimal conditions so that lithium titanate having the desired particle diameter is obtained.

Examples of the gas-flow pulverizer include a jet mill, a collision plate type gas-flow pulverizer, a flash dryer, an elbow jet, a turbo classifier, and a free pulverizer. Among these, a jet mill is particularly preferred in terms of a little contamination.

The lithium titanate obtained by pulverizing the fired product has an average particle diameter of 3.0 $\mu$m or less, preferably 0.10 $\mu$m or more and 3.0 $\mu$m or less, as a value obtained by a laser light scattering method.

The reason why the lithium titanate obtained by the pulverization treatment has an average particle diameter of 3.0 $\mu$m or less as a value obtained by a laser light scattering method is that if the lithium titanate has an average particle diameter in this range, a lithium secondary battery comprising this lithium titanate as a negative electrode active material has improved rapid charge and discharge performance, and on the other hand, if the lithium titanate after the pulverization treatment has an average particle diameter of more than 3.0 $\mu$m as a value obtained by a laser light scattering method, the lithium secondary battery has decreased rapid charge and discharge performance.

One feature of the fourth step is that the fired product of lithium titanate is pulverized by the gas-flow pulverizer to an average particle diameter of 3.0 $\mu$m or less, preferably 0.1 $\mu$m or more and 3.0 $\mu$m or less, as obtained by a laser light scattering method.

If the lithium titanate has an average particle diameter in the above range, a lithium secondary battery comprising this lithium titanate as a negative electrode active material particularly has excellent rapid charge and discharge characteristics, and on the other hand, if the lithium titanate after the pulverization treatment has an average particle diameter of more than 3.0 $\mu$m, a lithium secondary battery comprising this lithium titanate as a negative electrode active material has decreased rapid charge and discharge performance.

In this manner, according to the present invention, lithium titanate for a lithium secondary battery active material is obtained. In the present invention, classification may be performed as required. The lithium titanate for a lithium secondary battery active material obtained by the present invention is lithium titanate having a spinel structure in which titanium dioxide, an unreacted raw material, does not remain, and is represented by the following general formula (2):

$$Li_xTi_yO_{12} \qquad (2)$$

where the Li/Ti atomic ratio is in the range of 0.70 to 0.90, preferably 0.75 to 0.85, $3.0 \leq x \leq 5.0$, preferably $3.5 \leq x \leq 4.5$, and $4.0 \leq y \leq 6.0$, preferably $4.5 \leq y \leq 5.5$.

In addition, the lithium titanate for a lithium secondary battery active material obtained by the present invention preferably has an average particle diameter of 3.0 μm or less, more preferably 0.10 μm or more and 3.0 μm or less, as a value obtained by a laser light scattering method. In addition, this lithium titanate for a lithium secondary battery active material preferably has a specific surface area of 1.0 to 10.0 m²/g, more preferably 1.0 to 7.0 m²/g, as measured by the BET method. In addition, this lithium titanate for a lithium secondary battery active material preferably has a chlorine content of 1500 ppm or less, more preferably 500 ppm or less, and further preferably 100 ppm or less. Further, this lithium titanate for a lithium secondary battery active material is produced by adding 0.01% by weight or more and 1.2% by weight or less, preferably 0.03% by weight or more and 1.0% by weight or less of the sulfate with respect to the lithium titanate to be produced.

The lithium titanate for a lithium secondary battery active material obtained by the present invention can be used for either a positive electrode active material or a negative electrode active material, but is preferably used as a negative electrode active material because a lithium secondary battery using this lithium titanate as a negative electrode active material exhibits particularly excellent rapid charge and discharge characteristics.

In addition, a lithium secondary battery using the lithium titanate for a lithium secondary battery active material obtained by the present invention can be preferably used for hybrid electric vehicles (HEVs), and large batteries, such as a stationary type, and is also preferably used for, in addition, for example, electronic equipment, such as notebook computers, laptop computers, pocket word processors, cellular phones, cordless handsets, portable CD players, radios, liquid crystal televisions, backup power supplies, electric shavers, memory cards, and camcorders, and consumer electronic equipment, such as game equipment.

EXAMPLES

The present invention will be more specifically described below by Examples and Comparative Examples, but the present invention is not limited to the following Examples.

<Titanium Dioxide

Commercial titanium dioxides shown in Table 1 were used.
The average particle diameter was obtained by a laser light scattering method. All anatase type titanium dioxides used in the Examples had an anatase type content of 90% by weight or more.
In addition, after the sample was dissolved in an acid, the sulfur atom content in the titanium dioxide was measured by ICP-AES (inductively coupled plasma-atomic emission spectroscopy). In addition, the chlorine content in the titanium dioxide was measured by an X-ray fluorescence analysis method.
[Table 1]

|  | Manufacturing method | Crystal type | Average particle diameter (μm) | BET specific surface area (m²/g) | Sulfur content (% by weight) | Chlorine content (ppm) |
|---|---|---|---|---|---|---|
| Sample A | Sulfuric acid method | Anatase type | 0.56 | 28.0 | 300 | 13 |
| Sample B | Sulfuric acid method | Anatase type | 0.37 | 32.3 | 250 | 12 |
| Sample C | Sulfuric acid method | Anatase type | 1.21 | 52.5 | 105 | 11 |
| Sample D | Sulfuric acid method | Anatase type | 0.51 | 0.7 | 120 | 18 |

<Sulfate

Commercial sulfates shown in Table 2 were used.
A reagent manufactured by JUNSEI CHEMICAL CO., LTD. was used as magnesium sulfate ($MgSO_4 \cdot 7H_2O$, sample a).

A reagent manufactured by JUNSEI CHEMICAL CO., LTD. was used as calcium sulfate ($CaSO_4 \cdot 2H_2O$, sample b).

A reagent manufactured by JUNSEI CHEMICAL CO., LTD. was used as aluminum sulfate ($Al_2(SO_4)_3 \cdot 14\text{-}18H_2O$, sample c).

The average particle diameter was obtained from a scanning electron micrograph.

[Table 2]

| Sulfate sample | Compound | Average particle diameter ($\mu$m) |
|---|---|---|
| Sample a | Magnesium sulfate | 50 |
| Sample b | Calcium sulfate | 50 |
| Sample c | Aluminum sulfate | 20 |

[Example 1]

Titanium dioxide (the sample A shown in Table 1) and lithium carbonate ($Li_2CO_3$, average particle diameter: 8.2 $\mu$m) were mixed so that the molar ratio of lithium atoms in the lithium carbonate to titanium atoms in the titanium dioxide (Li/Ti) was 0.800. Further, magnesium sulfate (the sample a shown in Table 2, manufactured by JUNSEI CHEMICAL CO., LTD.) was added so as to be 0.03% by weight in terms of $SO_4$ with respect to lithium titanate to be produced, and dry mixing by a mixer was repeatedly performed to prepare a uniform mixture having a specific volume shown in Table 3 (the first step).

Then, the obtained mixture was pressure-molded at a pressure of 150 MPa, using a hand press, to prepare a pellet-like reaction precursor (the second step).

Then, the reaction precursor was fired in the air atmosphere at 720°C for 10 hours and cooled, and then, the fired product was recovered (the third step).

Then, the fired product was pulverized by a jet mill (the fourth step). The obtained pulverized product was identified by an X-ray diffractometer (XRD). This pulverized product was identified as $Li_4Ti_5O_{12}$ having a spinel structure.

The specific volume of the mixture obtained in the first step was obtained by placing 10 g of the mixture of titanium dioxide and lithium carbonate in a 50 ml graduated cylinder, tapping 500 times, allowing the cylinder to stand, then reading the volume, and calculating the following formula (3), according to a tapping method, based on the apparent density or apparent specific volume method described in JIS-K-5101.

$$\text{specific volume (ml/g)} = V/F \qquad (3)$$

where F represents the mass (g) of the treated sample in the receiver, and V represents the volume (ml) of the sample after the tapping.

[Example 2]

Titanium dioxide (the sample B shown in Table 1) and lithium carbonate ($Li_2CO_3$, average particle diameter: 8.2 $\mu$m) were mixed so that the molar ratio of lithium atoms in the lithium carbonate to titanium atoms in the titanium dioxide (Li/Ti) was 0.800. Further, calcium sulfate (the sample b shown in Table 2, manufactured by JUNSEI CHEMICAL CO., LTD.) was added so as to be 0.03% by weight in terms of $SO_4$ with respect to lithium titanate to be produced, and dry mixing by the mixer was repeatedly performed to prepare a uniform mixture having a specific volume shown in Table 3 (the first step).

Then, the obtained mixture was pressure-molded at a pressure of 150 MPa, using the hand press, to prepare a pellet-like reaction precursor (the second step).

Then, the reaction precursor was fired in the air atmosphere at 700°C for 8 hours and cooled, and then, the fired product was recovered (the third step).

Then, the fired product was pulverized by the jet mill (the fourth step). The obtained pulverized product was identified by the X-ray diffractometer. This pulverized product was identified as $Li_4Ti_5O_{12}$ having a spinel structure.

The specific volume of the mixture obtained in the first step was obtained by placing 10 g of the mixture of titanium dioxide and lithium carbonate in a 50 ml graduated cylinder, tapping 500 times, allowing the cylinder to stand, then reading the volume, and calculating the above formula (3), according to the tapping method, based on the apparent density or apparent specific volume method described in JIS-K-5101.

[Example 3]

Titanium dioxide (the sample A shown in Table 1) and lithium carbonate ($Li_2CO_3$, average particle diameter: 8.2 $\mu$m) were mixed so that the molar ratio of lithium atoms in the lithium carbonate to titanium atoms in the titanium dioxide (Li/Ti) was 0.800. Further, magnesium sulfate (the sample a shown in Table 2, manufactured by JUNSEI CHEMICAL CO., LTD.) was added so as to be 0.24% by weight in terms of $SO_4$ with respect to lithium titanate to be produced, and dry mixing by the mixer was repeatedly performed to prepare a uniform mixture having a specific volume shown in Table 3 (the first step).
Then, the obtained mixture was pressure-molded at a pressure of 150 MPa, using the hand press, to prepare a pellet-like reaction precursor (the second step).
Then, the reaction precursor was fired in the air atmosphere at 830°C for 5 hours and cooled, and then, the fired product was recovered (the third step).
Then, the fired product was pulverized by the jet mill (the fourth step). The obtained pulverized product was identified by the X-ray diffractometer. This pulverized product was identified as $Li_4Ti_5O_{12}$ having a spinel structure.
The specific volume of the mixture obtained in the first step was obtained by placing 10 g of the mixture of titanium dioxide and lithium carbonate in a 50 ml graduated cylinder, tapping 500 times, allowing the cylinder to stand, then reading the volume, and calculating the above formula (3), according to the tapping method, based on the apparent density or apparent specific volume method described in JIS-K-5101.

[Example 4]

Titanium dioxide (the sample B shown in Table 1) and lithium carbonate ($Li_2CO_3$, average particle diameter: 8.2 $\mu$m) were mixed so that the molar ratio of lithium atoms in the lithium carbonate to titanium atoms in the titanium dioxide (Li/Ti) was 0.800. Further, calcium sulfate (the sample b shown in Table 2, manufactured by JUNSEI CHEMICAL CO., LTD.) was added so as to be 0.24% by weight in terms of $SO_4$ with respect to lithium titanate to be produced, and dry mixing by the mixer was repeatedly performed to prepare a uniform mixture having a specific volume shown in Table 3 (the first step).
Then, the obtained mixture was pressure-molded at a pressure of 150 MPa, using the hand press, to prepare a pellet-like reaction precursor (the second step).
Then, the reaction precursor was fired in the air atmosphere at 770°C for 7 hours and cooled, and then, the fired product was recovered (the third step).
Then, the fired product was pulverized by the jet mill (the fourth step). The obtained pulverized product was identified by the X-ray diffractometer. This pulverized product was identified as $Li_4Ti_5O_{12}$ having a spinel structure.
The specific volume of the mixture obtained in the first step was obtained by placing 10 g of the mixture of titanium dioxide and lithium carbonate in a 50 ml graduated cylinder, tapping 500 times, allowing the cylinder to stand, then reading the volume, and calculating the above formula (3), according to the tapping method, based on the apparent density or apparent specific volume method described in JIS-K-5101.

[Example 5]

Titanium dioxide (the sample A shown in Table 1) and lithium carbonate ($Li_2CO_3$, average particle diameter: 8.2 $\mu$m) were mixed so that the molar ratio of lithium atoms in the lithium carbonate to titanium atoms in the titanium dioxide (Li/Ti) was 0.800. Further, magnesium sulfate (the sample a shown in Table 2, manufactured by JUNSEI CHEMICAL CO., LTD.) was added so as to be 0.6% by weight in terms of $SO_4$ with respect to lithium titanate to be produced, and dry mixing by the mixer was repeatedly performed to prepare a uniform mixture having a specific volume shown in Table 3 (the first step).
Then, the obtained mixture was pressure-molded at a pressure of 150 MPa, using the hand press, to prepare a pellet-like reaction precursor (the second step).
Then, the reaction precursor was fired in the air atmosphere at 720°C for 5 hours and cooled, and then, the fired product was recovered (the third step).
Then, the fired product was pulverized by the jet mill (the fourth step). The obtained pulverized product was identified by the X-ray diffractometer. This pulverized product was identified as $Li_4Ti_5O_{12}$ having a spinel structure.
The specific volume of the mixture obtained in the first step was obtained by placing 10 g of the mixture of titanium dioxide and lithium carbonate in a 50 ml graduated cylinder, tapping 500 times, allowing the cylinder to stand, then reading the volume, and calculating the above formula (3), according to the tapping method, based on the apparent density or apparent specific volume method described in JIS-K-5101.

[Example 6]

Titanium dioxide (the sample B shown in Table 1) and lithium carbonate ($Li_2CO_3$, average particle diameter: 8.2 $\mu$m) were mixed so that the molar ratio of lithium atoms in the lithium carbonate to titanium atoms in the titanium dioxide (Li/Ti) was 0.800. Further, calcium sulfate (the sample b shown in Table 2, manufactured by JUNSEI CHEMICAL CO., LTD.) was added so that the sulfur atoms were 0.6% by weight with respect to lithium titanate to be produced, and dry mixing by the mixer was repeatedly performed to prepare a uniform mixture having a specific volume shown in Table 3 (the first step).
Then, the obtained mixture was pressure-molded at a pressure of 150 MPa, using the hand press, to prepare a pellet-like reaction precursor (the second step).
Then, the reaction precursor was fired in the air atmosphere at 700°C for 5 hours and cooled, and then, the fired product was recovered (the third step).
Then, the fired product was pulverized by the jet mill (the fourth step). The obtained pulverized product was identified by the X-ray diffractometer. This pulverized product was identified as $Li_4Ti_5O_{12}$ having a spinel structure.
The specific volume of the mixture obtained in the first step was obtained by placing 10 g of the mixture of titanium dioxide and lithium carbonate in a 50 ml graduated cylinder, tapping 500 times, allowing the cylinder to stand, then reading the volume, and calculating the above formula (3), according to the tapping method, based on the apparent density or apparent specific volume method described in JIS-K-5101.

[Example 7]

Titanium dioxide (the sample A shown in Table 1) and lithium carbonate ($Li_2CO_3$, average particle diameter: 8.2 $\mu$m) were mixed so that the molar ratio of lithium atoms in the lithium carbonate to titanium atoms in the titanium dioxide (Li/Ti) was 0.800. Further, aluminum sulfate (the sample c shown in Table 2, manufactured by JUNSEI CHEMICAL CO., LTD.) was added so as to be 0.03% by weight in terms of $SO_4$ with respect to lithium titanate to be produced, and dry mixing by the mixer was repeatedly performed to prepare a uniform mixture having a specific volume shown in Table 3 (the first step).
Then, the obtained mixture was pressure-molded at a pressure of 150 MPa, using the hand press, to prepare a pellet-like reaction precursor (the second step).
Then, the reaction precursor was fired in the air atmosphere at 700°C for 5 hours and cooled, and then, the fired product was recovered (the third step).
Then, the fired product was pulverized by the jet mill (the fourth step). The obtained pulverized product was identified by the X-ray diffractometer. This pulverized product was identified as $Li_4Ti_5O_{12}$ having a spinel structure.
The specific volume of the mixture obtained in the first step was obtained by placing 10 g of the mixture of titanium dioxide and lithium carbonate in a 50 ml graduated cylinder, tapping 500 times, allowing the cylinder to stand, then reading the volume, and calculating the above formula (3), according to the tapping method, based on the apparent density or apparent specific volume method described in JIS-K-5101.

[Example 8]

Titanium dioxide (the sample A shown in Table 1) and lithium carbonate ($Li_2CO_3$, average particle diameter: 8.2 $\mu$m) were mixed so that the molar ratio of lithium atoms in the lithium carbonate to titanium atoms in the titanium dioxide (Li/Ti) was 0.800. Further, aluminum sulfate (the sample c shown in Table 2, manufactured by JUNSEI CHEMICAL CO., LTD.) was added so as to be 0.24% by weight in terms of $SO_4$ with respect to lithium titanate to be produced, and dry mixing by the mixer was repeatedly performed to prepare a uniform mixture having a specific volume shown in Table 3 (the first step).
Then, the obtained mixture was pressure-molded at a pressure of 150 MPa, using the hand press, to prepare a pellet-like reaction precursor (the second step).
Then, the reaction precursor was fired in the air atmosphere at 700°C for 5 hours and cooled, and then, the fired product was recovered (the third step).
Then, the fired product was pulverized by the jet mill (the fourth step). The obtained pulverized product was identified by the X-ray diffractometer. This pulverized product was identified as $Li_4Ti_5O_{12}$ having a spinel structure.
The specific volume of the mixture obtained in the first step was obtained by placing 10 g of the mixture of titanium dioxide and lithium carbonate in a 50 ml graduated cylinder, tapping 500 times, allowing the cylinder to stand, then reading the volume, and calculating the above formula (3), according to the tapping method, based on the apparent density or apparent specific volume method described in JIS-K-5101.

[Example 9]

Titanium dioxide (the sample A shown in Table 1) and lithium carbonate ($Li_2CO_3$, average particle diameter: 8.2 $\mu$m) were mixed so that the molar ratio of lithium atoms in the lithium carbonate to titanium atoms in the titanium dioxide (Li/Ti) was 0.800. Further, aluminum sulfate (the sample c shown in Table 2, manufactured by JUNSEI CHEMICAL CO., LTD.) was added so as to be 0.6% by weight in terms of $SO_4$ with respect to lithium titanate to be produced, and dry mixing by the mixer was repeatedly performed to prepare a uniform mixture having a specific volume shown in Table 3 (the first step).

Then, the obtained mixture was pressure-molded at a pressure of 150 MPa, using the hand press, to prepare a pellet-like reaction precursor (the second step).

Then, the reaction precursor was fired in the air atmosphere at 700°C for 5 hours and cooled, and then, the fired product was recovered (the third step).

Then, the fired product was pulverized by the jet mill (the fourth step). The obtained pulverized product was identified by the X-ray diffractometer. This pulverized product was identified as $Li_4Ti_5O_{12}$ having a spinel structure.

The specific volume of the mixture obtained in the first step was obtained by placing 10 g of the mixture of titanium dioxide and lithium carbonate in a 50 ml graduated cylinder, tapping 500 times, allowing the cylinder to stand, then reading the volume, and calculating the above formula (3), according to the tapping method, based on the apparent density or apparent specific volume method described in JIS-K-5101.

[Comparative Example 1]

$Li_4Ti_5O_{12}$ having a spinel structure was obtained as in Example 3, except that the sample C shown in Table 1 was used as titanium dioxide.

[Comparative Example 2]

$Li_4Ti_5O_{12}$ having a spinel structure was obtained as in Example 3, except that the sample D shown in Table 1 was used as titanium dioxide.

[Comparative Example 3]

$Li_4Ti_5O_{12}$ having a spinel structure was obtained as in Example 3, except that the second step was not performed.

[Comparative Example 4]

$Li_4Ti_5O_{12}$ having a spinel structure was obtained as in Example 3, except that the fired product was pulverized using a pin mill, instead of the jet mill, in the fourth step.

[Comparative Example 5]

$Li_4Ti_5O_{12}$ having a spinel structure was obtained as in Example 3, except that the fired product was pulverized using a hammer mill, instead of the jet mill, in the fourth step.

[Reference Example 1]

$Li_4Ti_5O_{12}$ having a spinel structure was obtained as in Example 1, except that no sulfate was added.
[Table 3]

| | Type of TiO$_2$ sample used | Sulfate | | Li/Ti feed molar ratio | Specific volume of mixture (ml/g) | Pulverizer used |
| | | Type | Amount of SO$_4$ added (% by weight) | | | |
|---|---|---|---|---|---|---|
| Example 1 | A | MgSO$_4$ | 0.03 | 0.8 | 1.32 | Jet mill |
| Example 2 | B | CaSO$_4$ | 0.03 | 0.8 | 1.60 | Jet mill |

(continued)

| | Type of $TiO_2$ sample used | Sulfate | | Li/Ti feed molar ratio | Specific volume of mixture (ml/g) | Pulverizer used |
|---|---|---|---|---|---|---|
| | | Type | Amount of $SO_4$ added (% by weight) | | | |
| Example 3 | A | $MgSO_4$ | 0.24 | 0.8 | 1.98 | Jet mill |
| Example 4 | B | $CaSO_4$ | 0.24 | 0.8 | 1.55 | Jet mill |
| Example 5 | A | $MgSO_4$ | 0.6 | 0.8 | 1.75 | Jet mill |
| Example 6 | B | $CaSO_4$ | 0.6 | 0.8 | 1.28 | Jet mill |
| Example 7 | A | $Al_2(SO_4)_3$ | 0.03 | 0.8 | 1.35 | Jet mill |
| Example 8 | A | $Al_2(SO_4)_3$ | 0.24 | 0.8 | 1.55 | Jet mill |
| Example 9 | A | $Al_2(SO_4)_3$ | 0.6 | 0.8 | 1.75 | Jet mill |
| Comparative Example 1 | C | $MgSO_4$ | 0.24 | 0.8 | 1.52 | Jet mill |
| Comparative Example 2 | D | $MgSO_4$ | 0.24 | 0.8 | 1.45 | Jet mill |
| Comparative Example 3 | A | $MgSO_4$ | 0.24 | 0.8 | 1.11 | Jet mill |
| Comparative Example 4 | A | $MgSO_4$ | 0.24 | 0.8 | 1.25 | Pin mill |
| Comparative Example 5 | A | $MgSO_4$ | 0.24 | 0.8 | 1.28 | Hammer mill |
| Reference Example 1 | A | - | 0 | 0.8 | 1.61 | Jet mill |
| Note: The amount of sulfate added in the table represents a value in terms of SO4 with respect to lithium titanate to be produced. | | | | | | |

<Evaluation of Lithium Titanate

The average particle diameter, the specific surface area by the BET method, the sulfur content, and the chlorine content were measured for the lithium titanates obtained in Examples 1 to 9, Reference Example 1, and Comparative Examples 1 to 5. In addition, X-ray diffraction analysis was performed, using Cu-Kα rays as a source, for the lithium titanates obtained in Examples 1 to 6 and Comparative Examples 1 to 6. In addition, the presence or absence of unreacted $TiO_2$ was evaluated by the presence or absence of a diffraction peak around 2θ (= 25° for anatase, 27° for rutile). The results of these are shown in Table 4.

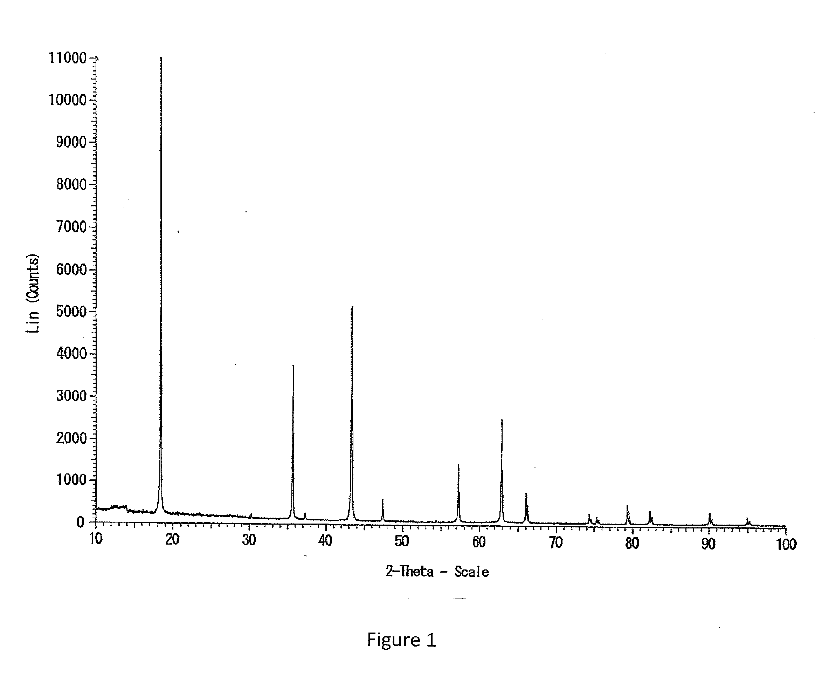

An X-ray diffraction diagram of the lithium titanate obtained in Example 1 is shown in FIG. 1.

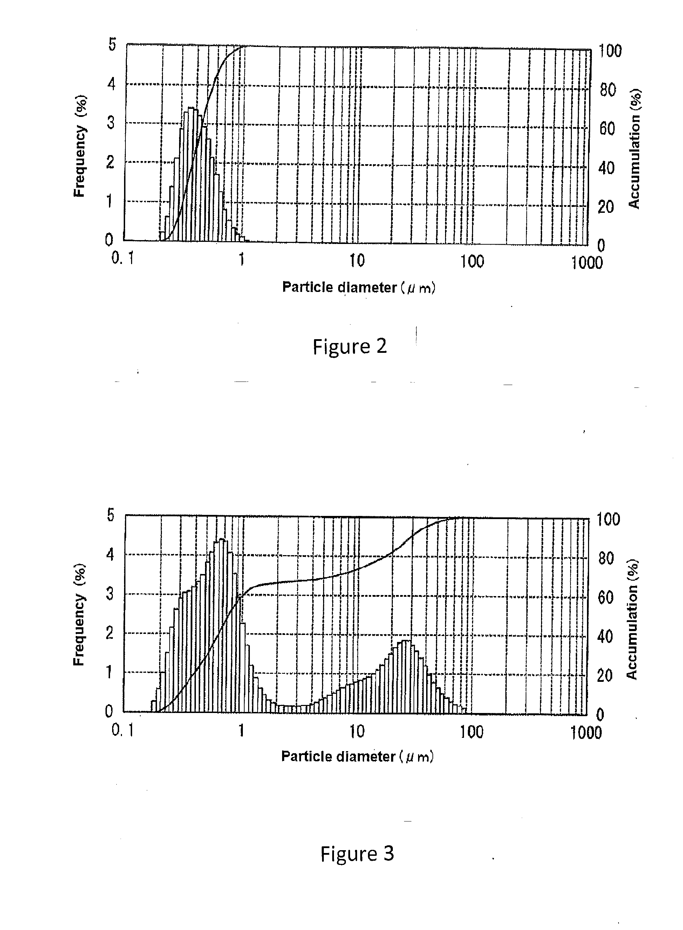

In addition, a particle size distribution of the lithium titanate obtained in Example 1, measured by a laser scattering particle size distribution measurement apparatus, is shown in FIG. 2. In addition, a particle size distribution of the lithium titanate obtained in Comparative Example 4, measured by the laser scattering particle size distribution measurement apparatus, is shown in FIG. 3.

The average particle diameter was obtained by a laser light scattering method.

In addition, the chlorine content in the lithium titanate was measured by X-ray fluorescence analysis.

In addition, the sulfur content in the lithium titanate was measured by ICP-AES (inductively coupled plasma-atomic emission spectroscopy) after dissolving the lithium titanate in an acid.

[Table 4]

| | Average particle diameter (μm) | BET specific surface area ($m^2/g$) | SO_4 content (% by weight) | | chlorine content (ppm) | Presence or absence of unreacted $TiO_2$ |
|---|---|---|---|---|---|---|
| | | | Total content | Sulfate added | | |
| Example 1 | 0.7 | 4.5 | 0.06 | 0.03 | 13 | absent |
| Example 2 | 0.6 | 5.2 | 0.055 | 0.03 | 12 | absent |
| Example 3 | 0.8 | 3.8 | 0.27 | 0.24 | 13 | absent |
| Example 4 | 0.9 | 4.8 | 0.265 | 0.24 | 12 | absent |
| Example 5 | 1.0 | 6.2 | 0.63 | 0.6 | 13 | absent |
| Example 6 | 1.1 | 7.2 | 0.625 | 0.6 | 12 | absent |
| Example 7 | 0.8 | 7.0 | 0.06 | 0.03 | 13 | absent |
| Example 8 | 1.1 | 5.2 | 0.27 | 0.24 | 13 | absent |
| Example 9 | 0.8 | 6.2 | 0.63 | 0.6 | 13 | absent |
| Comparative Example 1 | 0.9 | 9.0 | 0.255 | 0.24 | 11 | present |
| Comparative Example 2 | 1.2 | 4.5 | 0.265 | 0.24 | 18 | present |
| Comparative Example 3 | 0.8 | 5.8 | 0.27 | 0.24 | 13 | present |
| Comparative Example 4 | 3.1 | 2.1 | 0.27 | 0.24 | 13 | absent |
| Comparative Example 5 | 4.2 | 1.8 | 0.27 | 0.24 | 13 | absent |
| Reference Example 1 | 1.0 | 5.0 | 0.03 | 0 | 13 | absent |

<Battery Performance

(1) Fabrication of Lithium Secondary Battery

The lithium titanates in Examples 1 to 9, Comparative Examples 1 to 5, and Reference Example 1 manufactured as described above were used as an active material. 70 parts by weight of the lithium titanate, 15 parts by weight of acetylene black as a conductive aid, 15 parts by weight of polyvinylidene fluoride (PVDF) as a binder, and n-methyl-2-pyrrolidone as a solvent were mixed to prepare an electrode mixture.

This electrode mixture was applied to aluminum foil by a doctor blade method, with a thickness of 0.01 $g/cm^2$ after drying. Then, after vacuum drying at 150°C for 24 hours, the film was roll-pressed to 80% of the thickness of the film immediately after the application, and punched with an area of 1 $cm^2$ to obtain a negative electrode of a coin battery.

Using this negative electrode, and members, such as a separator, a positive electrode, a current collector, fittings, external terminals, and an electrolyte, a lithium secondary battery was fabricated.

A lithium metal plate was used as the positive electrode. A copper plate was used as the current collector. A porous polypropylene film was used as the separator. A solution of $LiPF_6$ dissolved at 1 mol/L in an equal volume mixed liquid of ethylene carbonate and ethyl methyl carbonate was used as the electrolyte.

(2) Charge and Discharge Test

For each coin battery fabricated as described above, a cycle in which the coin battery was charged to 1.0 V and then discharged to 2.0 V at constant current at a current density of 0.2 C at 25°C was repeated three times. Then, the charge and discharge cycle was repeated three times at each of discharge current densities of 0.5 C, 1.0 C, and 2.0 C, and each highest discharge capacity was taken as discharge capacity at each current density. The results are shown in Table 5.

In the evaluation of this charge and discharge test, the insertion reaction of lithium into the negative electrode active material was defined as charge, and the elimination reaction of lithium was defined as discharge.

[Table 5]

| | Highest discharge capacity | | | |
|---|---|---|---|---|
| | 0.1C (mAh/g) | 0.5C (mAh/g) | 1.0C (mAh/g) | 2.0C (mAh/g) |
| Example 1 | 170 | 158 | 153 | 148 |
| Example 2 | 168 | 159 | 153 | 149 |
| Example 3 | 169 | 162 | 155 | 152 |
| Example 4 | 168 | 161 | 154 | 153 |
| Example 5 | 170 | 164 | 156 | 153 |
| Example 6 | 170 | 163 | 155 | 150 |
| Example 7 | 169 | 163 | 153 | 146 |
| Example 8 | 170 | 164 | 153 | 147 |
| Example 9 | 170 | 165 | 155 | 147 |
| Comparative Example 1 | 164 | 152 | 143 | 137 |
| Comparative Example 2 | 164 | 149 | 142 | 136 |
| Comparative Example 3 | 158 | 132 | 125 | 111 |
| Comparative Example 4 | 154 | 125 | 121 | 120 |
| Comparative Example 5 | 150 | 125 | 119 | 119 |
| Reference Example 1 | 166 | 160 | 152 | 144 |

From the results in Table 5, it was found that the lithium secondary batteries using the lithium titanates in Examples 1 to 9 as the negative electrode active material had better rapid charge and discharge capacity than the lithium secondary batteries using the lithium titanates in Comparative Examples 1 to 5 as the negative electrode active material.

The method for manufacturing lithium titanate for a lithium secondary battery active material according to the present invention comprises the first step of preparing a mixture comprising a lithium compound, titanium dioxide having a specific surface area of 1.0 to 50.0 m$^2$/g as measured by the BET method, and one or two or more sulfates containing a metal element selected from the group consisting of magnesium, calcium, and aluminum; the second step of pressure-molding the above mixture to prepare a reaction precursor; the third step of firing the above reaction precursor; and the fourth step of pulverizing the fired product obtained in the above third step by a gas-flow pulverizer to obtain lithium titanate represented by the general formula: $Li_xTi_yO_{12}$, where the Li/Ti atomic ratio is in the range of 0.70 to 0.90, $3.0 \leq x \leq 5.0$, and $4.0 \leq y \leq 6.0$, having an average particle diameter of 3.0 $\mu$m or less, and therefore, lithium titanate comprising substantially no titanium dioxide, raw material, is obtained. In addition, a lithium secondary battery using this lithium titanate as a negative electrode active material exhibits particularly excellent rapid charge and discharge characteristics.

**Claims**

1.  A method for manufacturing lithium titanate for a lithium secondary battery active material, comprising:

    a first step of preparing a mixture comprising a lithium compound, titanium dioxide having a specific surface area of 1.0 to 50.0 m$^2$/g as measured by a BET method, and one or two or more sulfates containing a metal element selected from the group consisting of magnesium, calcium, and aluminum;
    a second step of pressure-molding the mixture to prepare a reaction precursor;
    a third step of firing the reaction precursor; and
    a fourth step of pulverizing a fired product obtained in the third step by a gas-flow pulverizer to obtain lithium titanate represented by a general formula: $Li_xTi_yO_{12}$, wherein a Li/Ti atomic ratio is in the range of 0.70 to 0.90, $3.0 \le x \le 5.0$, and $4.0 \le y \le 6.0$, having an average particle diameter of 3.0 μm or less.

2.  The method for manufacturing lithium titanate for a lithium secondary battery active material according to claim 1, wherein the mixture prepared in the first step has a specific volume of 1.30 ml/g or more.

3.  The method for manufacturing lithium titanate for a lithium secondary battery active material according to claim 1 or 2, wherein in the third step, a firing temperature of the reaction precursor is 600°C or more and 900°C or less.

4.  The method for manufacturing lithium titanate for a lithium secondary battery active material according to claim 1 or 2, wherein the gas-flow pulverizer is a jet mill.

5.  The method for manufacturing lithium titanate for a lithium secondary battery active material according to claim 1 or 2, wherein the titanium dioxide has a chlorine content of 1500 ppm or less.

6.  The method for manufacturing lithium titanate for a lithium secondary battery active material according to claim 1 or 2, wherein the titanium dioxide is anatase type titanium dioxide.

Figure 1

Figure 2

Figure 3

Europäisches
Patentamt

European
Patent Office

Office européen
des brevets

# EUROPEAN SEARCH REPORT

Application Number

EP 10 19 2519

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2001 213623 A (TOHO TITANIUM CO LTD) 7 August 2001 (2001-08-07) * paragraphs [0010] - [0035] * ----- | 1-6 | INV. H01M4/04 H01M10/052 H01M4/485 |
| A | JP 2005 239461 A (ISHIHARA SANGYO KAISHA) 8 September 2005 (2005-09-08) * the whole document * ----- | 1-6 | H01M4/131 H01M4/1391 C01G23/00 |

TECHNICAL FIELDS
SEARCHED    (IPC)

H01M
C01G

The present search report has been drawn up for all claims

| Place of search | Date of completion of the search | Examiner |
|---|---|---|
| The Hague | 24 January 2011 | Langouët, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 19 2519

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2011

| Patent document cited in search report | | Publication date | Patent family member(s) | Publication date |
|---|---|---|---|---|
| JP 2001213623 | A | 07-08-2001 | NONE | |
| JP 2005239461 | A | 08-09-2005 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6275263 A
- JP 2001213622 A
- JP 2000302547 A
- JP 2004235144 A